# FASCICULE DE BREVET EUROPEEN

(11) **EP 1 418 099 B1**
(45) Date de publication et mention de la délivrance du brevet: **01.02.2006**
(21) Numéro de dépôt: 03292789.9
(22) Date de dépôt: 07.11.2003
(51) Int. Cl.: B60S 1/38

(54) **Raclette d'essuyage pour balai d'essuie-glace de vehicule automobile**
Wischblatt für Scheibenwischer eines Kraftfahrzeuges
Wiper blade for windscreen wiper of a motor vehicle

(30) Priorité: 08.11.2002 FR 0213972
(43) Date de publication de la demande: 12.05.2004
(73) Titulaire: Peugeot Citroen Automobiles S.A., 78140 Vélizy Villacoublay (FR)
(72) Inventeur: Jeuffe, Gérard Michel, 78810 Feucherolles (FR)
(74) Mandataire: Robert, Jean-François

(56) Documents cités:
- DE-A- 3 614 335
- DE-A- 19 745 686
- FR-A- 2 533 182
- US-A- 3 566 432
- US-A- 4 123 817
- US-A- 4 524 481

## Description

La présente invention concerne une raclette d'essuyage pour balai d'essuie-glace de véhicule automobile.

Elle se rapporte plus particulièrement à une raclette d'essuyage comportant de manière classique une lèvre d'essuyage et une vertèbre de rigidification agencées dans un carter.

Les pare-brises des véhicules automobiles modernes apparaissent de plus en plus complexes dans leur forme de réalisation entraînant par voie de conséquence des défauts de planéité de la surface, c'est-à-dire des sommets et des creux sur la surface.

Les raclettes d'essuyage des balais d'essuie-glace actuels ne permettent pas de nettoyer correctement les pare-brises comportant des défauts de planéité de la surface ; la raclette en caoutchouc souple n'atteignant pas les creux lorsque celle-ci se situe sur une zone d'essuyage constituée de sommets. En effet, en présence de sommets et de creux, les sommets provoquent une compression différente de la lèvre à certains endroits entraînant un retournement brutal et bruyant de la lèvre.

On connaît déjà dans l'état de la technique antérieure, notamment par la demande de brevet GB 2 352 966, un balai d'essuie-glace du type décrit ci-dessus comportant en outre des moyens de suspension disposés entre la lame et le porteur permettant d'augmenter l'efficacité de l'essuyage dans le cas des lames très longues et/ou utilisées sur un grand pare-brise avec des variations extérieures substantielles de surface.

Ces moyens de suspension peuvent être constitués d'un fluide ou d'une mousse logée dans le porteur.

Un balai d'essuie-glace avec les caractéristiques du preambule de la revendication 1 est décrit dans le document DE 36 14 335 A.

Bien que ce type de conception de balai d'essuie-glace soit connu, il continue de faire l'objet de développements visant à simplifier sa fabrication et à réduire son coût.

Ainsi, l'invention a pour but de proposer une raclette d'essuyage perfectionnée qui soit simple à réaliser et peu coûteuse.

A cet effet, la présente invention a pour objet une raclette d'essuyage selon les caractéristiques de la revendication 1.

Selon l'invention, le matériau résilient est réalisé préférentiellement en caoutchouc.

Un autre objet de la présente invention concerne un balai d'essuie-glace de véhicule automobile pourvu d'une raclette telle qu'elle vient d'être décrite.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en coupe transversale d'une raclette selon la présente invention, et
- les figures 2 et 3 sont des vues similaires à la figure 1, illustrant la charnière d'articulation de la lèvre selon le sens de déplacement du balai d'essuie-glace.

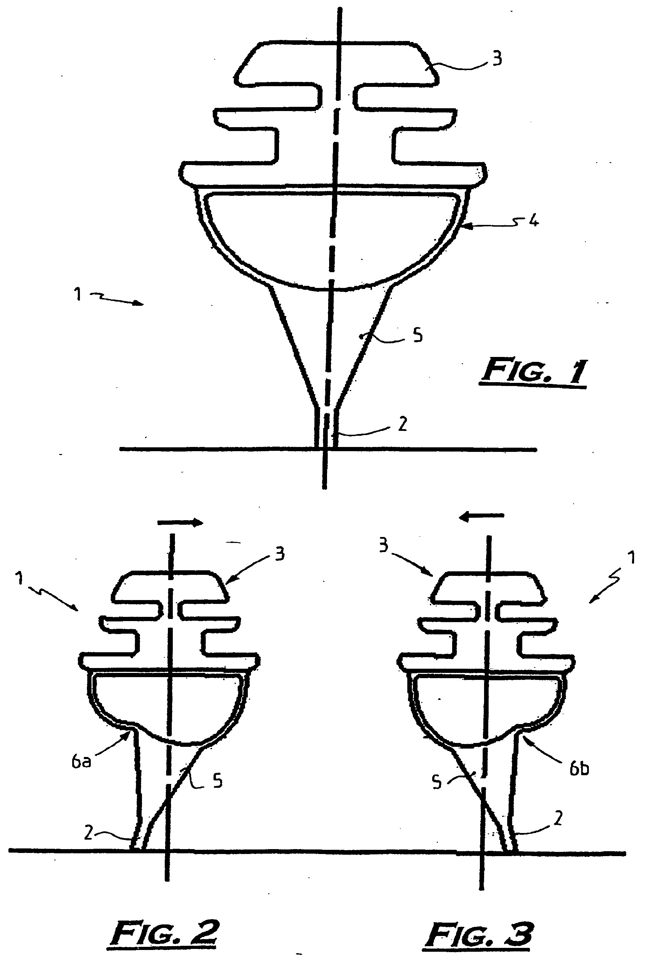

On a représenté sur les figures 1 à 3, une raclette d'essuyage 1 pour balai d'essuie-glace de véhicule automobile comportant une lèvre d'essuyage 2 et une vertèbre de rigidification 3 agencées dans un carter, non représenté, ainsi que des moyens de suspension 4 disposés entre la lèvre d'essuyage 2 et la vertèbre de rigidification 3.

Selon la présente invention, les moyens de suspension sont constitués d'un matériau résilient creux 4 reliant la vertèbre 3 à la lèvre 2, ledit matériau résilient creux présentant en coupe transversale la forme d'un demi-cercle dont le sommet de l'arc de cercle se prolonge par une partie saillante 5 présentant la forme d'un « V » et désignée pied de lèvre dont l'extrémité du « V » forme ladite lèvre 2.

Ce moyen de suspension 4 forme également une charnière d'articulation de la lèvre 2 de chaque côté dudit pied selon le sens de déplacement du balai d'essuie-glace, comme visible sur les figures 2 et 3, et désignées par les références 6a et 6b.

La déformation du matériau résilient 4 permet de satisfaire au retournement de la lèvre lors d'un changement de sens de direction du balai.

On comprend que ce matériau résilient 4 présentant la forme d'un demi-cercle assure grâce à son élasticité et sa variation de forme géométrique l'absorption des différents efforts axiaux résultants de la différence de parallélisme entre la vertèbre de rigidfication 3 et la surface à nettoyer.

On notera que l'épaisseur du matériau résilient 4 du type caoutchouc ou analogue est dimensionnée en fonction de la force d'appui désirée de la lèvre 2 de la raclette 1 sur la surface vitrée à nettoyer.

On comprend à la lecture de la description ci-dessus que la raclette selon la présente invention est relativement simple à réaliser et permet, par la déformation du matériau résilient, de compenser les défauts de planéité de la surface vitrée.

Bien que l'invention ait été décrite en liaison avec un mode de réalisation particulier elle comprend tous les équivalents techniques des moyens décrits.

Par ailleurs, on notera que la raclette selon la présente invention s'applique aussi bien pour les pare-brises que pour les lunettes arrière de véhicule automobile ou pour tout autres dispositifs comprenant une surface vitrée nécessitant un nettoyage tel que par exemple un pare-brise pour train.

## Revendications

1. Raclette d'essuyage pour balai d'essuie glace de véhicule automobile, comportant une lèvre d'essuyage (2) et une vertèbre de rigidification (3), agencées dans un carter ou surmoulées sur une vertèbre métallique au milieu de la vertèbre de rigidification (3), ainsi que des moyens de suspension (4), disposés entre la lèvre d'essuyage (2) et la vertèbre de rigidification (3), ces moyens de suspension (4) étant constitués par un corps creux en un matériau résilient, reliant la vertèbre à la lèvre (2) qui se prolonge par une partie saillante ou pied de lèvre (5) en forme de V et dont l'extrémité effilée constitue la lèvre, l'épaisseur du corps creux étant dimensionnée en fonction de la force d'appui de la lèvre sur la surface à nettoyer, où le corps creux formant moyen de suspension (4) présente en coupe transversale une section en demi cercle, dont le diamètre est attaché directement à la vertèbre **caracterisée en ce que** le sommet de l'arc de cercle est réuni à la partie saillante en V du pied à l'opposé de la lèvre (2) en constituant deux charnières élastiques pour le pied (5), localisées de chaque côté de celui-ci, et agencées pour permettre le retournement de la lèvre par déformation du matériau résilient autour de ces charnières lors d'un changement de direction du balai selon le sens de déplacement de celui-ci.

2. Raclette d'essuyage selon la revendication 1, **caractérisée en ce que** le matériau résilient du corps creux des moyens de suspension (4) est du caoutchouc.

3. Balai d'essuie glace pour véhicule automobile, **caractérisé en ce qu'**il est pourvu d'une raclette selon l'une quelconque des revendications 1 ou 2.

## Claims

1. Wiping scraper for a windscreen wiper blade of a motor vehicle comprising a wiper lip (2) and a stiffening vertebra (3), arranged in a housing or moulded over a metal vertebra in the middle of the stiffening vertebra (3), together with suspension means (4) placed between the wiper lip (2) and the stiffening vertebra (3), these suspension means (4) being constituted by a hollow body made of a resilient material, connecting the vertebra to the lip (2), which is extended by a V-shaped projecting portion or lip foot (5), the tapered end of which constitutes the lip, the thickness of the hollow body having dimensions according to the bearing force of the lip on the surface to be cleaned, where the hollow body forming a suspension means (4) has, in cross section, a semi-circular section, the diameter of which is attached directly to the vertebra, **characterised in that** the top of the arc of the circle is joined to the projecting V-shaped portion of the foot opposite the lip (2) by constituting two elastic hinges for the foot (5), located on each side of said foot, and arranged so as to allow the lip to be turned over by deformation of the resilient material around these hinges when the blade changes direction according to the direction of displacement of said blade.

2. Wiping scraper according to Claim 1, **characterised in that** the resilient material of the hollow body of the suspension means (4) is rubber.

3. Windscreen wiper blade for a motor vehicle, **characterised in that** it is provided with a scraper according to any one of Claims 1 or 2.

## Patentansprüche

1. Wischblatt für einen Scheibenwischer eines Kraftfahrzeugs mit einer Wischlippe (2) und einem Versteifungswirbel (3), die in einem Gehäuse angeordnet oder an einem Wirbel aus Metall in der Umgebung des Versteifungswirbels (3) angeformt sind, sowie mit Federungsmitteln (4), die zwischen der Wischlippe (2) und dem Versteifungswirbel (3) angeordnet sind, wobei die Federungsmittel (4) aus einem hohlen Körper aus elastischem Material bestehen, der den Wirbel mit der Lippe (2) verbindet und durch einen vorspringenden Abschnitt oder Fuß der Lippe (5) in Form eines V verlängert wird, dessen spitzes Ende die Lippe bildet, wobei die Dicke des hohlen Körpers abhängig vom Anlagedruck der Lippe auf der zu reinigenden Oberfläche gewählt wird und wobei der hohle Körper, der das Federungsmittel (4) bildet, den Querschnitt eines Halbkreises aufweist, dessen Durchmesser direkt am Wirbel befestigt ist, **dadurch gekennzeichnet, dass** die Spitze des Kreisbogens auf der Seite, die der Lippe (2) gegenüberliegt, mit dem V-förmigen vorspringenden Abschnitt des Fußes verbunden ist und zwei elastische Scharniere für den Fuß (5) bildet, die sich auf beiden Seiten von diesem befinden und das Wenden der Lippe durch Verformung des elastischen Materials um diese Scharniere bei einem Richtungswechsel des Scheibenwischers je nach dessen Bewegungsrichtung erlauben.

2. Wischblatt nach Anspruch 1, **dadurch gekennzeichnet, dass** das elastische Material des hohlen Körpers der Federungsmittel (4) aus Gummi ist.

3. Scheibenwischer für ein Kraftfahrzeug, **dadurch gekennzeichnet, dass** er mit einem Blatt nach einem der Ansprüche 1 oder 2 versehen ist.
